(19) Europäisches Patentamt
European Patent Office
Office européen des brevets

(11) **EP 2 932 325 B1**

(12) **EUROPEAN PATENT SPECIFICATION**

(45) Date of publication and mention
of the grant of the patent:
**29.06.2016 Bulletin 2016/26**

(21) Application number: **13817947.8**

(22) Date of filing: **09.12.2013**

(51) Int Cl.:
*G02B 19/00* (2006.01)      *G02B 3/00* (2006.01)

(86) International application number:
**PCT/FI2013/051148**

(87) International publication number:
**WO 2014/091076 (19.06.2014 Gazette 2014/25)**

(54) **AN OPTICAL SURFACE, LENS, REFLECTOR, OPTICAL ARRANGEMENT AND ILLUMINATOR**

OPTISCHE OBERFLÄCHE, LINSE, REFLEKTOR, OPTISCHE ANORDNUNG UND BELEUCHTUNGSVORRICHTUNG

SURFACE OPTIQUE, LENTILLE, RÉFLECTEUR, AGENCEMENT OPTIQUE ET ILLUMINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2012 FI 20126297
12.12.2012 FI 20126298**

(43) Date of publication of application:
**21.10.2015 Bulletin 2015/43**

(73) Proprietor: **Ledil Oy
24240 Salo (FI)**

(72) Inventor: **HUKKANEN, Hannu
FI-24240 Salo (FI)**

(74) Representative: **Seppo Laine Oy
Itämerenkatu 3 B
00180 Helsinki (FI)**

(56) References cited:
**WO-A1-2008/023494      US-A1- 2005 083 571
US-A1- 2008 252 853      US-B1- 6 295 165**

**Description**

FIELD

The present invention relates to illumination. In particular, the invention relates to devices for producing a light pattern with an even color distribution. More specifically, the invention relates to an optical surface according to the preamble portion of claim 1, to an optical arrangement according to the preamble portion of claim 11 and to an illuminator according to the preamble portion of claim 15.

BACKGROUND

Light emitting diodes, i.e. LED's, have become an increasingly popular source of light for illuminators. The recent developments in LED technology have radically improved the output of the diodes, whereby new application areas have emerged. Indeed, the use of LED's has expanded from the traditional indication purposes to more demanding indoor and outdoor lighting apparatuses.

The improved light output has revealed problems newly associated with LED's. One particular issue is the color distribution in the produced light patter. Color distribution was never considered an issue with traditional LED's because they had relatively low light output. With modern LED's with high light output, however, the distribution of color is a concern as LED's are used to illuminate large areas in indoor lighting, for example. The issue is emphasized when using separate LED's for particular wavelength bandwidths. In indoor lighting applications, for example, it is common to use one LED for each primary color, i.e. three LED's for red, green and blue, respectively. In such a multi-source illuminator it is common that the colors are clearly distinguishable in the light pattern produced, which is not desirable when pursuing light with uniform color.

For managing the color distribution, various solutions have been proposed. An established solution for managing the color distribution of illuminators with an LED light source is to use a plurality special lenses, the incident surfaces of which have been threat-ed such to mix different wavelengths produced by the LED into a light pattern which contains all wavelengths evenly distributed across the pattern.

US 2008/0252853 discloses the features of the preamble of claim 1. Another solution is proposed by US 2011/0018016 A1 which discloses an optical surface for producing a desired color pattern. The optical surface according to US 2011/0018016 A1 features a plurality of bulges which extend from an otherwise planar emission surface of a lens. The bulges are used to converge light beams refracting from the emission surface of the lens for controlling the color pattern produced.

The optical surface as proposed by US 2011/0018016 A1 is mainly suitable for controlling the angular color distribution pattern, which does not address the issue of mixing different wavelengths produced by the LED into a light pattern which contains all wavelengths evenly distributed across the pattern.

It is therefore an aim of the present invention to provide an optical surface which - when used as an emission surface or as a portion thereof - is able to mix different wavelengths produced into a light pattern which contains all wavelengths evenly distributed across the pattern.

SUMMARY

The aim of the present invention is achieved with aid of a novel optical surface which extends in at least two Cartesian base dimensions. A cross-section of the surface taken in either of said two Cartesian base dimensions features a first plurality of protuberances which extend to the same direction in a third Cartesian dimension. The cross-section of the optical surface also features a second plurality of protuberances which extend to the opposite direction as the first plurality of protuberances in the third Cartesian dimension. The pluralities of protuberances form converging and diverging optical shapes for mixing different wavelengths scattering from the optical surface. The two Cartesian base dimensions define a base surface, from which the first and second plurality of protuberances are deviations, which exhibit an area acting as a converging or diverging optical surface such that each protuberance is separated by a section along the base surface defined by said two Cartesian base dimensions.

More specifically, the optical surface according to the present invention is characterized by the characterizing portion of claim 1.

The aim of the invention is on the other hand achieved with a novel a lens, reflector, optical arrangement or illuminator, which has such an optical surface, preferably as the emission surface.

Considerable benefits are gained with aid of the present invention. Because the optical surface is provided with both converging and diverging deviations from a planar shape, the light beams exhibiting a certain wavelength are effectively mixed thus producing a light pattern which contains all wavelengths evenly distributed across the pattern. By equipping a lens or a reflector with such a novel optical surface, different colors resulting from defects in a single light source or emitted by a plurality of light sources emitting different wavelengths are effectively mixed thus producing a solid light pattern.

BRIEF DESCRIPTION OF DRAWINGS

In the following, exemplary embodiments of the invention are described in greater detail with reference to the accompanying drawings in which:

Fig. 1 presents a cross-sectional view of an illuminator featuring a lens which has been provided with an optical surface according to embodiments of the present invention,

Fig. 2 presents a detailed top elevation view of an optical surface according to one embodiment of the invention featuring alternating converging and diverging protuberances,

Fig. 3 presents a schematic isometric view of the arrangement of converging and diverging protuberances according to the embodiment of Fig. 2 in a mathematical plane,

Fig. 4a presents a schematic cross-sectional view of the arrangement of converging and diverging protuberances according to the embodiment of Fig. 2 in a mathematical plane,

Fig. 4b presents the path of light beams travelling through the arrangement of Fig. 4a,

Fig. 5 presents a top elevation view of an optical surface according to a second embodiment of the invention featuring converging and diverging protuberances as shown in Figs. 3 and 4 arranged as alternating groups of three,

Fig. 6 presents a schematic view of the formation of the base plane according to one approach,

Fig. 7 presents a cross-sectional view of an optical arrangement according to an embodiment of the invention featuring a reflector with a truncated conical reflecting surface and a lens with a planar emission surface,

Fig. 8 presents a cross-sectional view of an optical arrangement according to another embodiment of the invention featuring a reflector with a truncated conical incident surface and a lens with a conically emission recessed emission surface,

Fig. 9 presents a cross-sectional view of an alternative reflector shape with a stepped reflecting surface and a lens with a planar emission surface,

Fig. 10 presents a cross-sectional view of an alternative reflector shape with a parabolic reflecting surface and a lens with a conically recessed emission surface,

Fig. 11 presents a cross-sectional view of an optical arrangement comprising two parallel lens-reflector arrangements of Fig. 10, and

Fig. 12 presents a cross-sectional view of an optical arrangement of Fig. 8 with shorter flanking portion of the reflector.

DETAILED DESCRIPTION OF EXAMPLARY EMBODIMENTS

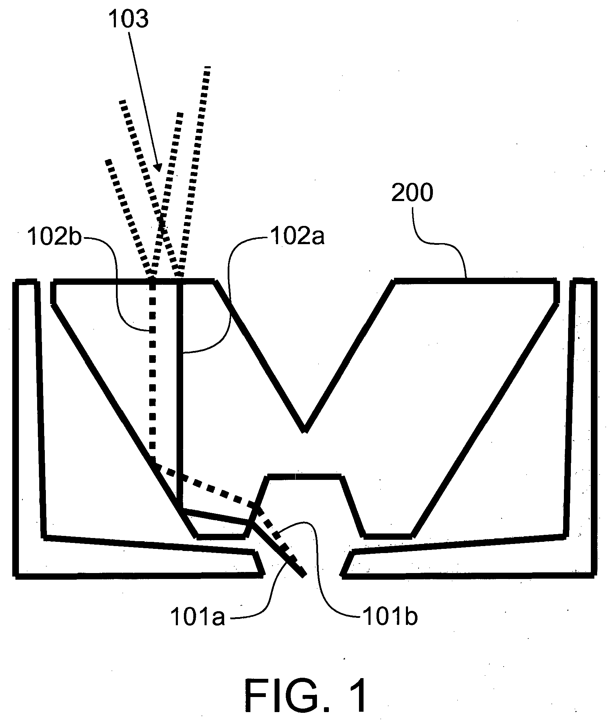

The optical surface 200 herein described may be used to scatter light beams transiting from a lens or a reflector. In this context *optical surface* is meant to refer to a surface which reflects or refracts light beams without substantial absorption of said beams. In this context the term *transit* is meant to refer to such interference in the path of radiation which causes the radiation to reflect or refract. Fig. 1 demonstrates an example in which light beams 101a, 101b produced by an artificial light source, such as an LED (not shown) travel through an incidence surface of a lens and thus experience a first refraction. The reflected light beams 102a, 102b then exit the lens through an emission surface which has been provided with a novel optical surface 200 for producing scattered light beams 103 with mixed wavelengths. Considering the lens example shown in Fig. 1 and the following elucidation about the particulars of the optical surface, one may conceive a respective reflector application for such an optical surface.

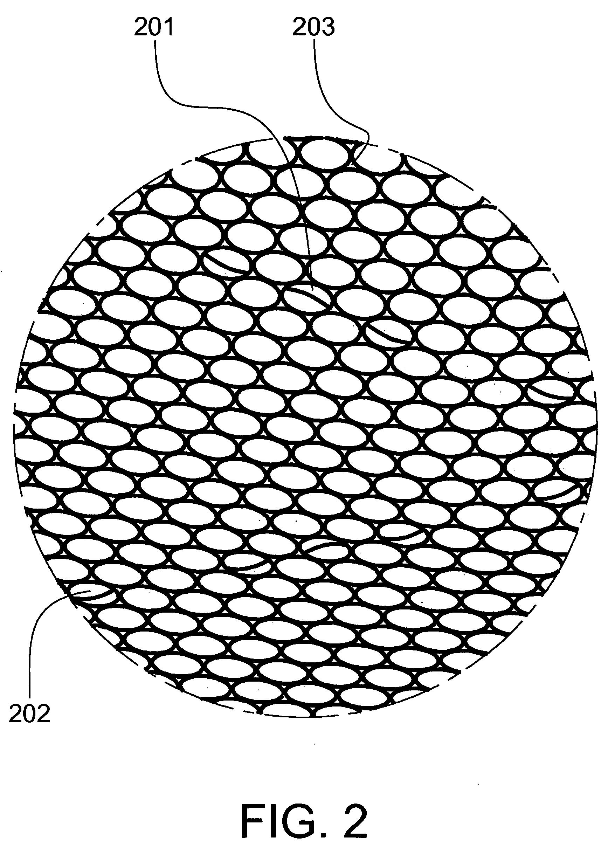

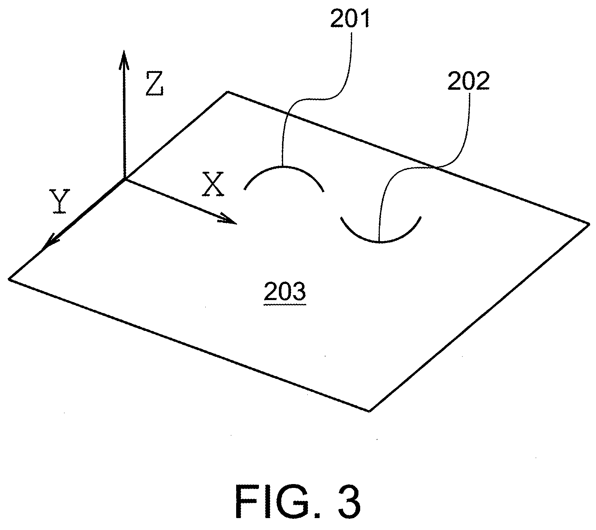

Fig. 2 shows a top detail view of the optical surface 200 which features alternating converging and diverging protuberances 201, 202. The converging protuberances 201 project from the base surface 203 toward the main radiation direction and are indicated by a downward opening curve. The diverging protuberances 202 are project from the base surface 203 in a direction opposing the main radiation direction and are indicated by an upward opening curve. As is further apparent from Fig. 2, the protuberances 201, 202 alternate without overlapping each other and without forming groups of neighboring protuberances of the same orientation, whereby each protuberance 201, 202 is at least partly separated by a section of the base surface 203. The separation of each protuberance by a patch of base surface is more visible from Fig. 3. The protuberances 201, 202 have a circular or oval shape when examined from an elevated plan view.

The concept of *base surface* 203 is specified by Fig. 3 which shows a schematic isometric view of the arrangement of converging and diverging protuberances of Fig. 2. The base surface 203 may be seen as a mathematical plane formed by two Cartesian axes which form the base dimension X, Y of the base surface 203. Because the base surface 203 has been provided with the deviations discussed here after, the resulting surface is not planar. Nevertheless, in order to be able to describe the reference from which the protuberances are deviating, the term base surface 203 is used as the starting point for said deviations.

That said, the base surface 203 may also be curved (not shown), whereby the resulting optical surface is both curved and provided with protuberances in mutually opposing directions. In this respect, the base surface 203 may be defined as *mainly* extending in the two main base Cartesian dimensions X, Y while extending to the third Cartesian dimension Z. By *mainly* extending is meant that the extent to which the base surface 203 extends in the third Cartesian dimension Z is substantially smaller than the two main base Cartesian dimensions X, Y. More specifically, the extension of the base surface 203 in the third Cartesian dimension Z in a given portion of the surface is at most half of that of either extension in the two main base dimensions X, Y. Where the base surface 203 is provided with an equal amount of opposing protuberances 201, 202 having an equal extension, the base surface 203 may be defined as the continuous surface which would result if the opposing protuberances 201, 202 would cancel each other out. More specifically, if each protuberance shape extending in one direction would be reverted by a corresponding protuberance extending in the opposing direction, the resulting shape would represent the base surface 203. According to another embodiment: the base surface 203 is provided with protuberances 201, 202, the number of which is unequal in that the ratio of converging and diverging protuberances may be 40 to 60 or vice versa. The equality of the number of converging and diverging protuberances may therefore be adjusted slightly without losing the optical effect.

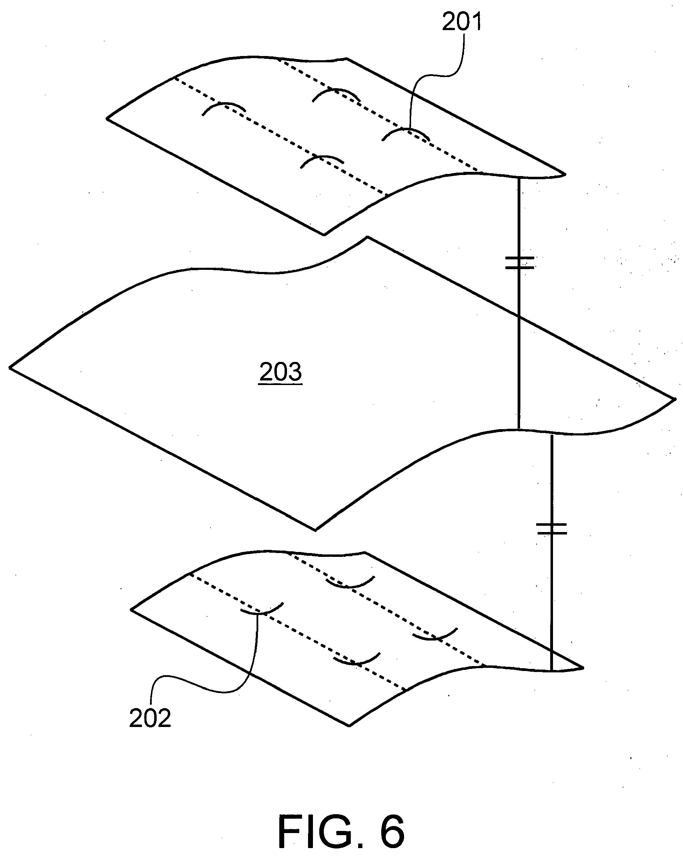

Alternatively according to embodiment, the base surface 203 is defined by a surface continuously connecting the center points of the radii of the protuberances 201, 202, which is demonstrated by Fig. 6. The protuberances 201, 202 are defined by a radius or radii which has/have a center point. In Fig. 6 said center points are connected by a dashed line. When the dashed connecting lines connected, the resulting surface represents the base surface 203 of the optical surface.

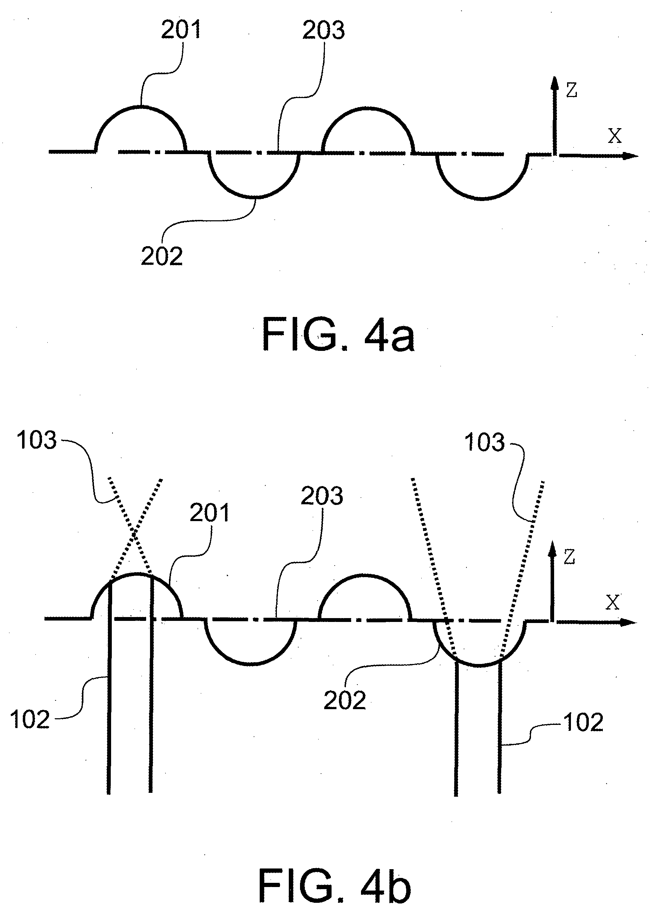

The optical surface depicted in Figs. 2 and 3 is further clarified by Figs. 4a and 4b which show a schematic cross-sectional view of the optical surface 200. More specifically, the cross-section of Figs. 4a and 4b is taken along the second base direction Y of Fig. 3. From the Figures it may be seen that the arrangement of converging and diverging protuberances projecting in opposite directions from the base surface 203. In the illustrated example the base surface 203 is planar. As described above, the base surface 203 may alternatively be curved (not shown). Projecting from the base surface 203 of Fig. 4a, namely from the first base dimension X, is a first plurality of protuberances 201 which extend to one direction in the third Cartesian dimension Z, which direction is upward in Fig. 4. While the first plurality of protuberances 201 are shown to occupy the base surface 203 in the first base direction X, the first plurality of protuberances 201 also occupy the base surface 203 in the second base direction Y as illustrated by Fig. 2. The same applies to the second plurality of protuberances 202 which extend to the opposing direction in the third Cartesian dimension Z, which direction is downward in Fig. 4a. Fig. 4b shows how the upward projecting protuberances 201 converge the light beam 102, whereas the downward projecting protuberances 202 diverge the light beam 102, which results in a mixed light pattern 103.

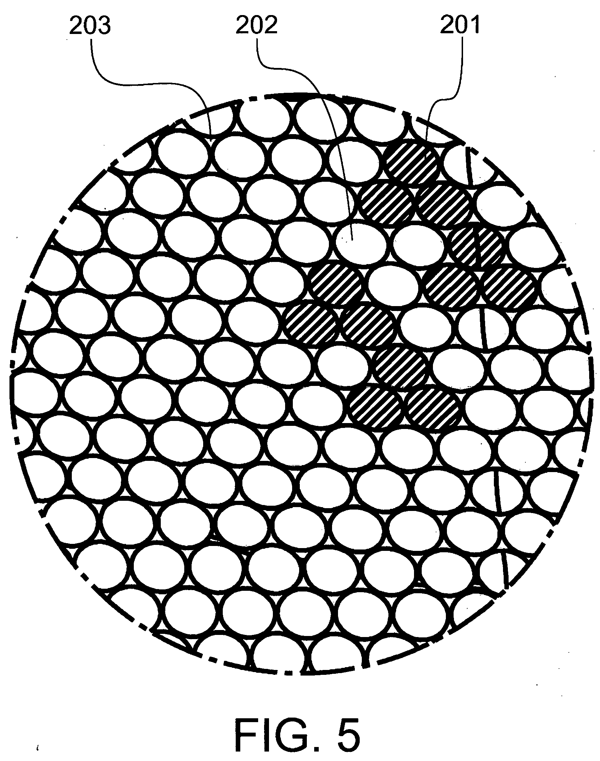

In the example shown in Figs. 2 to 4, the protuberances 201, 202 projecting to opposite directions from the base surface 203, are arranged somewhat sporadically in an alternating fashion. It is, however, possible to group up sub-pluralities of protuberances extending in one direction to create a structure demonstrated by Fig. 5. In the illustrated example protuberances 201, 202 extending in opposing directions are arranged in groups of three. In such an arrangement each protuberance is directly surrounded by two similar protuberances and four opposing protuberances. By grouping similar protuberances has the additional benefit of avoiding repetitive patterns in the resulting protuberance arrangement. The optical surface 200 preferably includes a similar amount of converging and diverging protrusions 201, 202 for avoiding aberration in the resulting light pattern.

The protuberances 201, 202 capable of achieving the desired effect through converging and diverging refractions or reflections may be provided with various different specifications. The desired effect may be achieved with a variety of different size of lenses and corresponding protuberances. For example, an optical surface having the diameter of 20 mm may be provided with protuberances having a diameter of 0,01 to 1,5 mm. However, if the diameter of the optical surface is enlarged to 100 mm, the diameter of the protuberances could be of the order of 0,01 to 2 mm. In this respect, the mutual size difference of the optical surface and the protuberance may vary greatly. Generally speaking, it is preferably to provide the protuberances as dense as possible of improving the mixing effect. The distance between two neighboring protuberance is therefore preferably less than twice the diameter of the protuberance. The depth of the protuberances is dictated by the reflective properties of the optical surface. Accordingly, the depth of the protuberances ranges from almost planar to a depth which corresponds to the critical angle for total internal reflection. If this depth were to be exceeded, the light beam would reflect to an undesirable direction thus failing to achieve the desired mixing effect.

The optical surface 200 as described above is preferably manufactured in a molding process. The protuberances are therefore established by laser machining the mold surface.

The optical surface 200 may be applied to any structure which transits a light beam. Particular applications for such an optical surfaces are the emission surfaces of lenses and the reflective surfaces of reflectors. It is also to be noted that a combination of optical surfaces in a device may be provided with the protuberances herein described. For example, in a system including two lenses arranged successively, both emission surfaces may be provided with such protuberances, whereas only one TIR surface, i.e. lateral or flanking surface, may be provided with protuberances. The TIR surface - i.e. total internal reflection surface - connects the incidence surface of the lens to the emission surface thereof in an outwardly flaring manner. The idea behind the TIR surface is that the artificial light beam arriving scattered from the reflector and reflecting through the incidence surface is reflected efficiently by the TIR surface for minimizing radiation energy losses. It is therefore advantageous to use a TIR surface on the flank of the lens. Alternatively, the TIR surface may be parabolic.

Indeed, any of the optical surfaces may be provided with such protuberances; it may be the light incidence surface, TIR surface or the emission surface. Also it is to be noted that the shape of the protuberance need not conform to a mathematical shape but the cross-sectional shape of the protuberance may also be a so called free-form line being sculptured freely.

The optical surface may also or alternatively be a reflecting surface in a reflector.

The novel optical surface may be used to mix wavelengths originating from a single artificial light source, such as an LED, or from a plurality of artificial light source, such as a compound LED having individual LED's for each primary color or a cluster of LED's, for example.

Alternatively or additionally, only a portion of the optical surface may be provided with such color mixing protuberances.

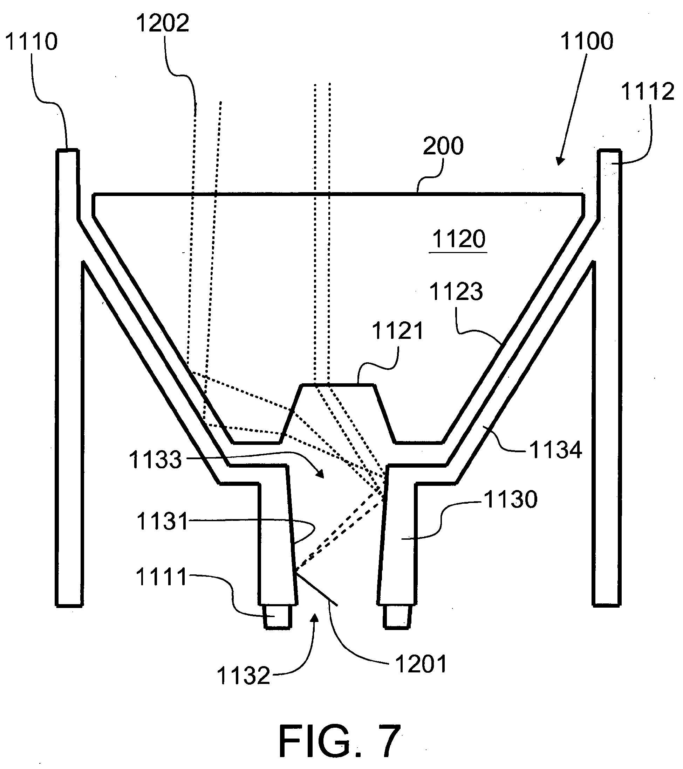

Turning now to Figs. 7 to 12, which show the described optical surface 200 as part of an optical arrangement working in an illuminator 1100.

According to a first embodiment shown in Fig. 7, an illuminator 1100 has a frame 1110 which houses an artificial light source (not shown), a reflector 1130 and a lens 1120. The illuminator as herein described is especially suitable for decorative purposes but also for stage lighting and other such applications, wherein a particular object is to be illuminated with a white spotlight. The reflector 1130 is integrated as part of the frame 1110 and arranged between the artificial light source and the lens 1200 such to reflect the radiation 1201 emitted by the artificial light source to the lens 1200. The reflector 1130 has a reflecting surface 1131 is constructed as a closed profile which has an entry end 1132 for receiving the radiation 1201 and an exit end 1133 for leading the radiation out of the profile. In this context a *closed profile* is meant to refer to such a continuous shape which has no gaps through which light could escape. In this context the term *radiation transit* is meant to refer to such interference in the path of radiation which causes the radiation to reflect or refract.

The exit end 1133 has an average internal diameter which is larger than the average internal diameter of the entry end 1132. That is to say that the profile flares outward in the main direction of the artificial radiation. In this context the term *average internal diameter* is meant to refer to the average value of the inner diameter taken about the center normal axis of the perimeter defined by the reflecting surface. In the example of Fig. 7, said outward flaring is established with a truncated conical shape of the profile of the reflecting surface. The reflecting surface 1131 is therefore rotationally symmetrical. The outward flaring shape is advantageous in that it improves optical efficiency compared to a cylindrical shape which would degrade optical efficiency by bouncing the beam excessively between opposing wall sections.

The lens 1120 includes a light incidence surface 1121 for collecting the scattered radiation 1201 arriving from the reflector 1130 and an emission surface 200 for emitting the refracted radiation from the illuminator 1100. The lens 1120 also has a lateral TIR surface 1123 which is in the illustrated embodiment is a conical flank surface, wherein TIR stands for total internal reflection. The TIR surface 1123 connects the incidence surface 1121 of the lens 1120 to the emission surface 200 thereof in an outwardly flaring manner. The idea behind the TIR surface 1123 is that the artificial light beam arriving scattered from the reflector 1130 and reflecting through the incidence surface 1121 is reflected efficiently by the TIR surface 1123 for minimizing radiation energy losses. It is therefore advantageous to use a TIR surface on the flank of the lens 1120. Alternatively, the TIR surface 1123 may be parabolic.

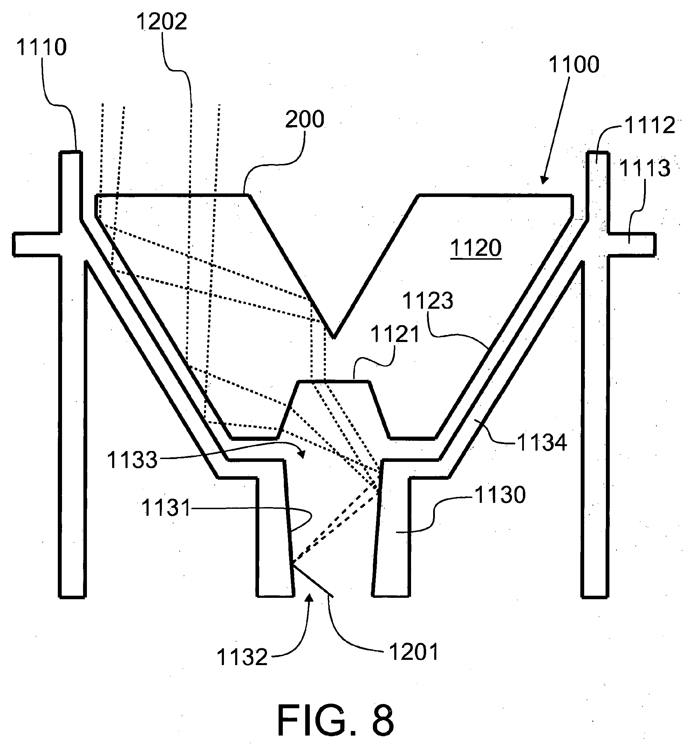

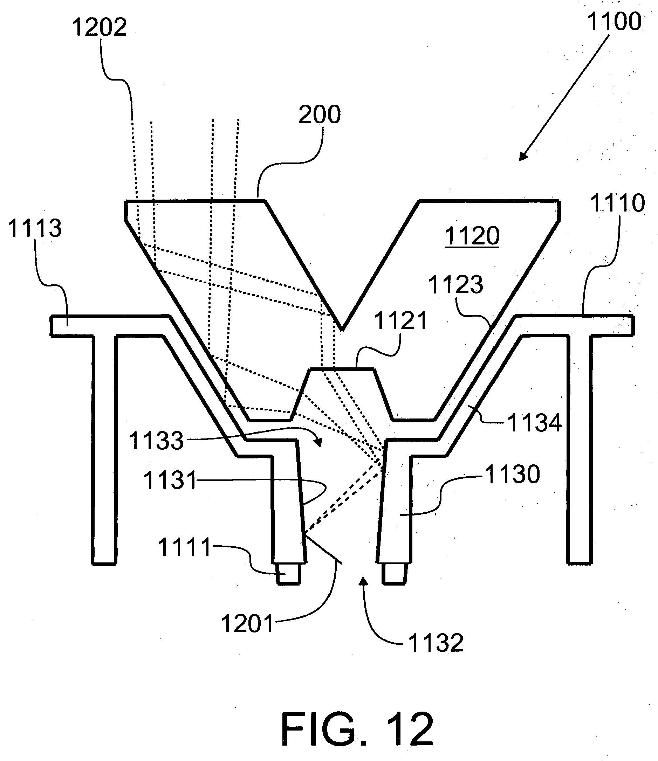

The reflector 1130 is arranged to the optical path of the radiation 1201 such that the reflective surface 1131 is configured to reflect and scatter the radiation 1201 to the lens 1120, namely to the incidence surface 1121 thereof. The reflective surface 1131 has a portion 1134 which flanks the lateral TIR surface 1123 of the lens 1120. In Figs. 7 and 8, that portion 1134 extends along the lateral TIR surface 1123 over the whole length of the surface. In the example of Fig. 12, the flanking portion 1134 covers approximately half of the length of the lateral TIR surface 1123. The portion 1134 extends from the exit end 1133 of the reflector 1130 and merges into the frame 1110 of the illuminator 1100. The frame 1110 may have a flange 1113 for securing the illuminator 1100 in flush installations. In the example of Figs. 7 and 8, the frame 1110 has an extension 1112 in the main radiating direction of the light beam for providing glare prevention. More specifically, the tubular frame 1110 has an annular extension 1112 which extends further than the emission surface 200 of the lens 1120 in the main radiating direction. In the example of Figs. 7 and 12, the reflector 1130 has been provided with a ring or pins 1111 shown in the Fig. as protruding downwards from the entry end 1132 of the reflector for aligning the reflector 1130 and frame 1110 to the artificial light source.

As a portion 1134 of the reflecting surface flanks the lateral TIR surface 1123 stray light escaping through the TIR surface 1123 is reflecting back into the lens 1120 and simultaneously refracted for further mixing effect. The portion 1134 of the reflective surface 1131 flanking the lateral TIR surface 1123 of the lens 1120 therefore has a shape which corresponds to that of the lateral TIR surface 1123. In the example of Figs. 7, 8 and 12, the portion is frusto-conical. In the Figs. there has been shown a gap between the portion 1134 and the lateral TIR surface 1123. However, such a gap is not necessary. On the contrary, the lens 1120 may be attached to the directly to the reflector 1130 by mating the portion 1134 and the lateral TIR surface 1123. For attachment, a transparent adhesive may be used.

The reflecting surface 1131 itself is configured to scatter the received radiation 1201. This effect may be achieved by increasing the roughness of the surface 1131. The reflecting surface 1131 also reflects light beams to inside the lens 1120. The light therefore coming out of the illuminator is diffused lighting which is directed to the lens 1120. The exit end 1133 of the reflector 1130 is configured to lead the scattered radiation out of the reflector 1130, whereby the light incidence surface 1121 of the lens 1200 is arranged on the optical path of said scattered radiation such to collect, reflect and further scatter said scattered radiation onto the radiation emission surface 200. In the example of Fig. 7 the light incidence surface 1121 is recessed for dividing the scattered radiation and the planar light emission surface 200 is configured to collect radiation transmitted by the light incidence surface 1121.

As defined herein the term non-specular reflection is understood as diffuse reflection wherein the reflection of light from a surface is reflected at more than one angle rather than at just one angle as in the case of specular reflection.

The reflecting surface 1131 has optical efficiency of at least 80 per cent. More preferably, the optical efficiency of the reflecting surface 1131 is at least 94 %. Even more preferably, the optical efficiency of the reflecting surface 1131 is at least 95. The optical efficiency may be defined as the relationship between output values with a piece of optics and without it:

$$efficiency = \frac{LED1}{LED2} \cdot \frac{CAL\,1}{CAL2} \cdot 100\,\%$$

where LED 1 refers to the output of an artificial light source without optics and LED2 refers to the output of the light source with a piece of optics, such as a reflector 1131. The output may be measured in lumen, lux, candela or other value indicative of the performance of the light source. CAL1 refers to the output of an artificial reference light source without optics, whereas CAL2 refers to the output of said artificial reference light source with optics. A reference light source may be an LED having known properties as such, i.e. without optics, and when used in a measurement arrangement. LED's, for example, are typically measurede inside a measurement chamber. The measurement chamber used for determining optical efficiency always contains imperfections, such as deficiencies in reflective surfaces or the light absorbing tendency of fixtures etc. in the chamber. Therefore the relationship between the values of the artificial reference light source when exposed (CAL1) and in a measurement chamber (CAL2) is used to cancel out the influence of the shortcomings of the measurement arrangement.

The reflecting surface 1131 is preferably metallated or made of highly reflective synthetic material. Typical metal used for metallation is aluminum and typical highly reflective materials are polyamide, polycarbonate, acrilnitrile-butadiene-styrol and polytetrafluoro-etylene. An exemplary highly reflective material is white polycarbonate.

Typical diffuse reflective materials such as the above mentioned aluminum have a visible reflectance about 85%, while surfaces based on e.g. polytetrafluoroethylene, such as those disclosed in US 4,912,720 and US 5,892,621 exhibit reflectance up to 99%.

The amount of light scattering in the reflecting surface can be adjusted by choosing the roughness of the reflecting surface as desired. For metallated surfaces the roughness is preferably between VDI8 and VDI40, more preferably between VDI5 and VDI25, corresponding to $R_a$ values 0.25μm - 10μm and 0.56μm - 1.8μm, respectively.

It is known in the art the highly reflective synthetic materials scatter light as such. For example, the polytetrafluoroethylene disclosed in US 5,892,621 includes polymeric nodes interconnected by fibrils defining a microporous structure giving rise to high diffuse reflectivity. It is also known that roughness of the surface can be increased by using suitable painting.

According to one embodiment the metallated reflective surface is covered by an additional layer such as $SiO_2$, HDMS, plasma polymer and varnish. These additional layers do not affect the reflectivity of the surface but they do enhance the stability of the reflecting surface towards undesired environmental effects such as moisture and oxidation. According to another embodiment, the reflective surface is metallized environmentally protective coating, such as lacquer.

According to a preferable embodiment, the reflector 1130 is made from polycarbonate, particularly from high reflectivity white polycarbonate known as hyper reflective white PC. For producing high reflectivity, the reflecting surface 1131 is roughened or polished or both.

As concerns the reflection within the reflector 1130, it is to be noted that the more the light beam is reflected and therefore also refracted within the reflector 1130, the more different wavelengths in the light beam are mixed. However, the purpose of the upwardly opening profile of the reflector 130 is to lead the beam out of the device for minimizing the loss of optical efficiency experienced with each reflection.

Turning now to Fig. 8 illustrating the illuminator 1100 with a reflector profile having a truncated conical shape, wherein the lens incident surface 1121 corresponds to those of the first embodiment but wherein with the emission surface 200 of the lens 1120 has a conical recession. It is to be noted that the portion 1134 of the reflector 1130 shown in Fig. 7 has been omitted from Fig. 8 for highlighting the shape of the reflector profile. The conically recessed emission surface 200 has the effect that it further mixes the colors of the artificial light by adding reflections to the path of the light beam. The shape of the light pattern may also be adjusted by shaping the emission surface 200 accordingly. In the embodiment, each light beam is reflected at least twice within the lens.

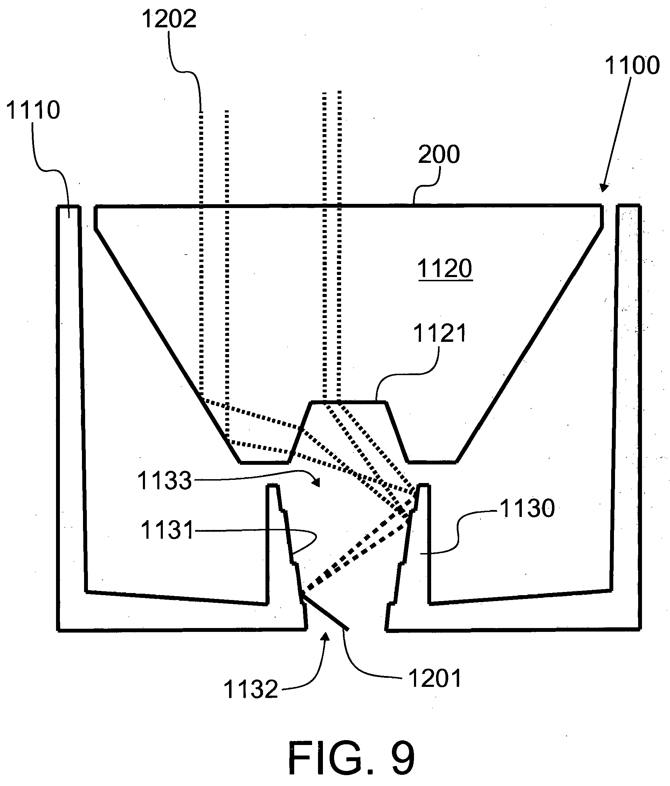

Turning now to Fig. 9 which illustrates the illuminator 1100 with a lens 1120 corresponding to that of the first embodiment (Fig. 7) but wherein the reflector 1130 has been provided with a stepped reflecting surface 1131. It is to be noted that the portion 1134 of the reflector 1130 shown in Fig. 7 has been omitted from Fig. 9 for highlighting the shape of the reflector profile. The angle of successive steps in the reflecting surface 1131 have preferably different angle, wherein the refraction is enhanced. Accordingly, the more the angles of successive steps in the reflecting surface 1131 differ, the better refraction is achieved, whereby the surface 1131 may be made more even which improves the reflectivity and further the optical efficiency of the reflector 1130.

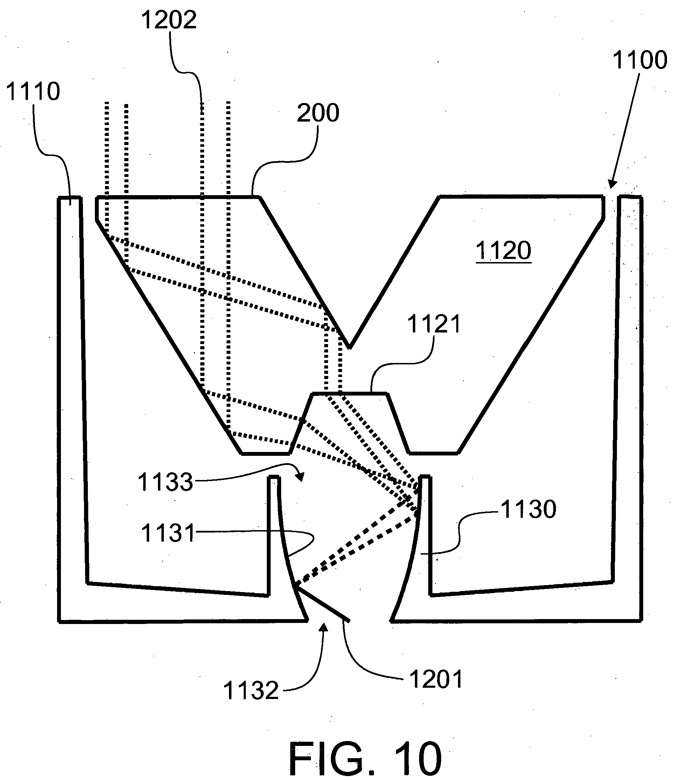

Fig. 10 illustrates the illuminator 1100 according a lens 1120 corresponding to that of the second embodiment (Fig. 8) but wherein the reflector has been provided with a parabolic reflecting surface 1131. It is to be noted that the portion 1134 of the reflector 1130 shown in Fig. 7 has been omitted from Fig. 9 for highlighting the shape of the reflector profile. With aid of the parabolic shape of the reflecting surface 1131, the resulting light beam may be better focused to the desired target.

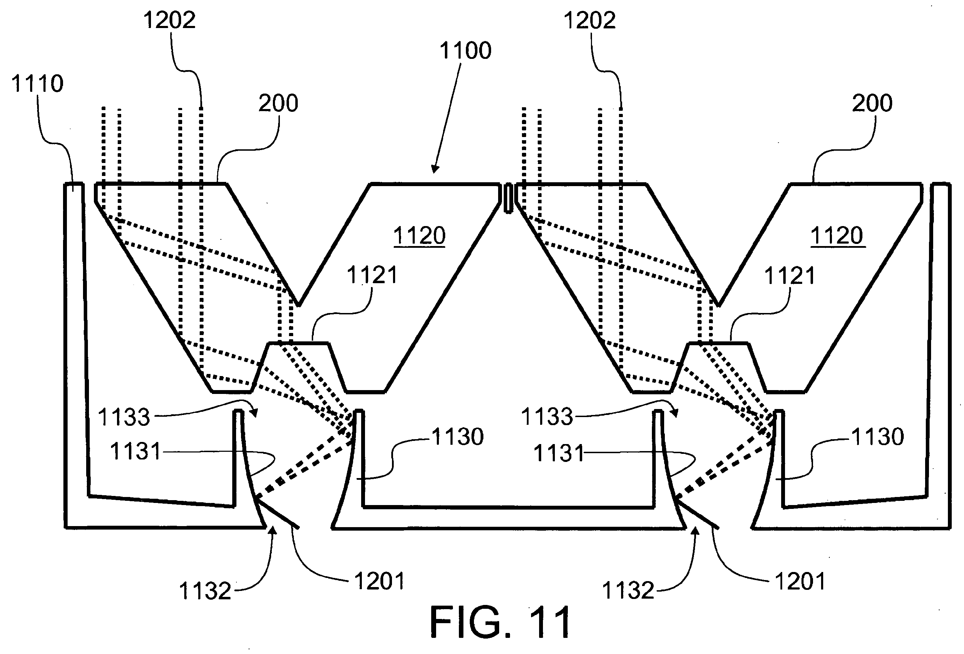

The illuminator 1100 may also have a plurality of the reflector arrangements as described above. According to an example demonstrated by Fig. 11, the illuminator may include two parallel reflector-lens arrangements as depicted with reference to Fig. 10. The illuminator may also include a combination of reflector-lens arrangements according to different embodiments. For example, the arrangement shown in Fig. 11 could be supplemented by a reflector-lens arrangement according to Fig. 8. Indeed, any combination described herein could be combined. Each combination is to be provided with a portion 1134 of the reflector as shown in Fig. 7.

According to a further embodiment (not shown), wherein a secondary reflector is used instead of a lens. The secondary reflector has a first reflective surface which is arranged in respect to the reflector such to receive scattered radiation being emitted from the exit end of the reflector. The first reflective surface of the secondary reflector is therefore arranged on the optical path of the radiation emitted by the lens 1120 for collecting said scattered radiation. Once the scattered radiation arrives from the lens 1120 to the first reflective surface of the secondary reflector, it is reflected onto a second reflective surface. The second reflective surface collects and reflects radiation reflected by the first reflective surface. The reflective surfaces preferably also scatter the light as explained in connection with Figs. 7 to 11. After the reflection by the second reflective surface of the secondary reflector, light exiting the illuminator has a deviated main radiating direction from the radiation emitted by the artificial light source for producing indirect illumination. By changing the main radiating direction of the artificial light, the light exiting the illuminator is diffused, which is advantageous for illuminating spaces or items, where it is necessary to avoid the possibly blinding light source to be directly visible, such as decorative lighting, storage spaces, dentist appliances, etc. The secondary reflector 1140 also provides for asymmetric light patterns, if necessary. For improving reflectivity, the reflective surfaces preferably have a metal coating.

TABLE 1: LIST OF REFERENCE NUMBERS.

| Number | Part |
| --- | --- |
| 101a | first emitted light beam |
| 101b | second emitted light beam |
| 102a | first reflected light beam |
| 102b | second reflected light beam |
| 103 | scattered light beam with mixed wavelengths |

(continued)

| Number | Part |
|--------|------|
| 200 | emission surface |
| 201 | first plurality of protuberances, converging protuberances |
| 202 | second plurality of protuberances, diverging protuberances |
| 203 | base surface |
| 1100 | illuminator |
| 1110 | frame |
| 1111 | positioning pin |
| 1112 | extension |
| 1113 | flange |
| 1120 | lens |
| 1121 | light incidence surface |
| 1122a | converging protuberance |
| 1122b | diverging protuberance |
| 1123 | lateral TIR surface |
| 1130 | reflector |
| 1131 | reflecting surface |
| 1132 | entry end |
| 1133 | exit end |
| 1134 | flanking portion |
| 1200 | light beam |
| 1201 | radiation emitted by an artificial light source |
| 1202 | mixed light beam |

**Claims**

1. An optical surface (200) extending in at least two Cartesian base dimensions (X, Y), wherein a cross-section of the surface (200) taken in either of said two Cartesian base dimensions (X, Y) comprises

   - a first plurality of protuberances (201) extending to the same direction in a third Cartesian dimension (Z),
   - a second plurality of protuberances (202) extending to the opposite direction as the first plurality of protuberances (201) in the third Cartesian dimension (Z),

   wherein the pluralities of protuberances (201, 202) form converging and diverging optical shapes for mixing different wavelengths scattering from the optical surface (202),
   **characterized in that** the two Cartesian base dimensions (X, Y) define a base surface (203), from which the first and second plurality of protuberances (201, 202) are deviations, which exhibit an area acting as a converging or diverging optical surface such that each protuberance (201, 202) is separated by a section along the base surface (203) defined by said two Cartesian base dimensions (X, Y).

2. The optical surface (200) according to claim 1, wherein the surfaces formed by the protuberances (201, 202) are defined in all Cartesian dimensions (X, Y, Z).

3. The optical surface (200) according to claim 1 or 2, wherein the first and second plurality of protuberances (201, 202) extend over a same length from the base surface (203) defined by said two Cartesian base dimensions (X, Y).

4. The optical surface (200) according to any of the preceding claims, wherein the optical surface (202) exhibits the same amount of protuberances (201, 202) in both directions in the third Cartesian dimension (Z).

5. The optical surface (200) according to any of the preceding claims, wherein the first plurality of protuberances (201) as well as the second plurality of protuberances (202) are arranged as groups each featuring three neighboring either first or second protuberance (201, 202), respectively.

6. The optical surface (200) according to claim 7, wherein the protuberances (201, 202) have a circular, elliptical or polygonal shape when viewed in the third Cartesian dimension (Z).

7. The optical surface (200) according to claim 9, wherein the protuberances (201, 202) have a hexagonal shape when viewed in the third Cartesian dimension (Z).

8. The optical surface (200) according to any of the preceding claims, wherein the optical surface (200) has a thickness in the third Cartesian dimension (Z).

9. A lens comprising an optical surface (200) as defined in any of the preceding claims.

10. A reflector comprising an optical surface (200) as defined in any of claims 1 to 8.

11. An optical arrangement comprising:

- a reflector (1130) which comprises a reflective surface (1131), which is configured to reflect and scatter radiation (1201) received to the reflective surface (1131) and which reflective surface (1131) is metallated or made of polyamide, polycarbonate, acrilnitrile-butadiene-styrol, polytetrafluoro-etylene or white polycarbonate, and
- a lens (1120) comprising

o a light incidence surface (1121), which is arranged to collect said scattered radiation (1201) from the reflector (1130),
o a lateral TIR surface (1123), and
o an emission surface (200) which is configured to collect radiation refracted by the light incidence surface (1121) and lateral TIR surface (1123) and to emit the refracted radiation from the lens (1120),

wherein reflective surface (1131) has a portion (1134) which flanks the lateral TIR surface (1123) of the lens (1120) for reflecting and refracting stray light escaping through the TIR surface (1123) back into the lens (1120), **characterized in that** the emission surface (200) is an optical surface as defined by claim 1.

12. The optical arrangement according to claim 11, wherein the reflective surface (1131) is constructed as a closed profile which comprises:

- an entry end (1132) for receiving the radiation (1201) and having a first average internal diameter, and
- an exit end (1133) for leading the radiation out of the profile and having a second average internal diameter which is larger than the first average internal diameter of the entry end (1132) of the reflecting surface (1131),

wherein the portion (1134) flanking the lateral TIR surface (1123) is arranged at the exit end (1133) of the reflector (1130).

13. The optical arrangement according to claim 12, wherein the portion (1134) of the reflective surface (1131) flanking the lateral TIR surface (1123) of the lens (1120) has a shape corresponding to that of the lateral TIR surface (123).

14. The optical arrangement according to any of the preceding claims 11 to 13, wherein said portion (1134) covers at least half of the length of the lateral TIR surface (1123).

15. An illuminator comprising an artificial light source for emitting radiation (1201) which has an optical path, **characterized by** an optical arrangement according to any of the preceding claims 11 to 14, wherein the reflector (1130) is arranged to the optical path of the radiation (1201).

**Patentansprüche**

1. Optische Fläche (200), die sich in mindestens zwei kartesischen Grunddimensionen (X, Y) erstreckt, wobei ein in jeder der beiden kartesischen Grunddimensionen (X, Y) genommener Querschnitt der Fläche (200) Folgendes umfasst:

   - eine erste Vielzahl von Vorsprüngen (201), die sich in der gleichen Richtung in einer dritten kartesischen Dimension (Z) erstrecken,
   - eine zweite Vielzahl von Vorsprüngen (202), die sich in der entgegengesetzten Richtung zu der ersten Vielzahl von Vorsprüngen (201) in der dritten kartesischen Dimension (Z) erstrecken,

   wobei die Vielzahlen von Vorsprüngen (201, 202) konvergierende und divergierende optische Formen zum Mischen verschiedener, von der optischen Fläche (202) gestreuter Wellenlängen bilden, **dadurch gekennzeichnet, dass** die beiden kartesischen Grunddimensionen (X, Y) eine Grundfläche (203) definieren, von welcher die erste und die zweite Vielzahl von Vorsprüngen (201, 202) Abweichungen sind, welche einen Bereich darstellen, der als konvergierende oder divergierende optische Fläche wirkt, so dass jeder Vorsprung (201, 202) durch einen Abschnitt entlang der durch die beiden kartesischen Grunddimensionen (X, Y) definierten Grundfläche (203) getrennt ist.

2. Optische Fläche (200) nach Anspruch 1, wobei die durch die Vorsprünge (201, 202) gebildeten Flächen in allen kartesischen Dimensionen (X, Y, Z) definiert sind.

3. Optische Fläche (200) nach Anspruch 1 oder 2, wobei die erste und die zweite Vielzahl von Vorsprüngen (201, 202) sich über eine gleiche Länge von der durch die beiden kartesischen Grunddimensionen (X, Y) definierten Grundfläche (203) erstrecken.

4. Optische Fläche (200) nach einem der vorhergehenden Ansprüche, wobei die optische Fläche (202) die gleiche Menge von Vorsprüngen (201, 202) in beiden Richtungen in der dritten kartesischen Dimension (Z) aufweist.

5. Optische Fläche (200) nach einem der vorhergehenden Ansprüche, wobei die erste Vielzahl von Vorsprüngen (201) ebenso wie die zweite Vielzahl von Vorsprüngen (202) als Gruppen angeordnet sind, wobei jede von diesen drei benachbarte erste bzw. zweite Vorsprünge (201, 202) aufweist.

6. Optische Fläche (200) nach Anspruch 7, wobei die Vorsprünge (201, 202) in der dritten kartesischen Dimension (Z) gesehen eine kreisförmige, elliptische oder Polygonform aufweisen.

7. Optische Fläche (200) nach Anspruch 9, wobei die Vorsprünge (201, 202) in der dritten kartesischen Dimension (Z) gesehen eine Hexagonform aufweisen.

8. Optische Fläche (200) nach einem der vorhergehenden Ansprüche, wobei die optische Fläche (200) eine Dicke in der dritten kartesischen Dimension (Z) aufweist.

9. Linse, welche eine optische Fläche (200) umfasst, wie in den vorhergehenden Ansprüchen definiert.

10. Reflektor, welcher eine optische Fläche (200) umfasst, wie in den Ansprüchen 1 bis 8 definiert.

11. Optische Anordnung, welche Folgendes umfasst:

    - einen Reflektor (1130), welcher eine reflektierende Fläche (1131) umfasst, welche konfiguriert ist, an der reflektierenden Fläche (1131) empfangene Strahlung (1201) zu reflektieren und zu streuen, und wobei die reflektierende Fläche (1131) metallisiert oder aus Polyamid, Polycarbonat, Acrilnitril-Butadien-Styrol, Polytetrafluorethylen oder weißem Polycarbonat hergestellt ist, und
    - eine Linse (1120), welche Folgendes umfasst:

      ◦ eine Lichteintrittsfläche (1121), welche ausgebildet ist, die gestreute Strahlung (1201) vom Reflektor (1130) zu sammeln,
      ◦ eine seitliche Totalreflexions-Fläche (TIR-Fläche, 1123) und
      ◦ eine Emissionsfläche (200), welche konfiguriert ist, von der Lichteintrittsfläche (1121) und der seitlichen Totalreflexions-Fläche (TIR-Fläche, 1123) gebrochene Strahlung zu sammeln und die gebrochene Strahlung von der Linse (1120) zu emittieren;

wobei die reflektierende Fläche (1131) einen Teil (1134) aufweist, welcher die seitliche Totalreflexions-Fläche (TIR-Fläche, 1123) der Linse (1120) zum Reflektieren und Brechen von durch die Totalreflexions-Fläche (TIR-Fläche, 1123) austretendem Störlicht zurück in die Linse (1120) flankiert, **dadurch gekennzeichnet, dass** die Emissionsfläche (200) eine optische Fläche ist, wie durch Anspruch 1 definiert.

12. Optische Anordnung nach Anspruch 11, wobei die reflektierende Fläche (1131) als geschlossenes Profil aufgebaut ist, welches Folgendes umfasst:

- ein Eintrittsende (1132) mit einem ersten durchschnittlichen Innendurchmesser zum Empfangen der Strahlung (1201) und
- ein Austrittsende (1133) mit einem zweiten durchschnittlichen Innendurchmesser zum Leiten der Strahlung aus dem Profil, wobei der zweite durchschnittliche Innendurchmesser größer als der erste durchschnittliche Innendurchmesser des Eintrittsendes (1132) der reflektierenden Fläche (1131) ist,

wobei der die seitliche Totalreflexions-Fläche (TIR-Fläche, 1123) flankierende Teil (1134) am Austrittsende (1133) des Reflektors (1130) angeordnet ist.

13. Optische Anordnung nach Anspruch 12, wobei der die seitliche Totalreflexions-Fläche (TIR-Fläche, 1123) der Linse (1120) flankierende Teil (1134) der reflektierenden Fläche (1131) eine Form aufweist, die der der seitlichen Totalreflexions-Fläche (TIR-Fläche, 123) entspricht.

14. Optische Anordnung nach einem der vorhergehenden Ansprüche 11 bis 13, wobei der Teil (1134) mindestens die halbe Länge der seitlichen Totalreflexions-Fläche (TIR-Fläche, 1123) abdeckt.

15. Beleuchtungseinheit, die eine künstliche Lichtquelle zum Emittieren von einen optischen Weg aufweisender Strahlung (1201) umfasst, **gekennzeichnet durch** eine optische Anordnung nach einem der vorhergehenden Ansprüche 11 bis 14, wobei der Reflektor (1130) am optischen Weg der Strahlung (1201) angeordnet ist.

## Revendications

1. Surface optique (200) s'étendant dans au moins deux dimensions de base cartésiennes (X, Y), dans laquelle une section transversale de la surface (200) prise dans l'une ou l'autre desdites deux dimensions de base cartésiennes (X, Y) comprend :

- une première pluralité de protubérances (201) s'étendant dans la même direction dans une troisième dimension cartésienne (Z),
- une seconde pluralité de protubérances (202) s'étendant dans la direction opposée à celle de la première pluralité de protubérances (201) dans la troisième dimension cartésienne (Z),

dans laquelle les pluralités de protubérances (201, 202) constituent des formes optiques convergentes et divergentes pour mélanger différentes longueurs d'onde diffusant de la surface optique (202), **caractérisée en ce que** les deux dimensions de base cartésiennes (X, Y) définissent une surface de base (203), dont les première et seconde pluralités de protubérances (201, 202) sont des déviations qui présentent une surface agissant comme surface optique convergente ou divergente de sorte que chaque protubérance (201, 202) soit séparée par une section le long de la surface de base (203) définie par lesdites deux dimensions de base cartésiennes (X, Y).

2. Surface optique (200) selon la revendication 1, dans laquelle les surfaces formées par les protubérances (201, 202) sont définies dans toutes les dimensions cartésiennes (X, Y, Z).

3. Surface optique (200) selon la revendication 1 ou la revendication 2, dans laquelle la première et la seconde pluralité de protubérances (201, 202) s'étendent sur une même longueur à partir de la surface de base (203) définie par lesdites deux dimensions de base cartésiennes (X, Y).

**4.** Surface optique (200) selon l'une quelconque des revendications précédentes, dans laquelle la surface optique (202) présente la même quantité de protubérances (201, 202) dans les deux directions dans la troisième dimension cartésienne (Z).

**5.** Surface optique (200) selon l'une quelconque des revendications précédentes, dans laquelle la première pluralité de protubérances (201) ainsi que la seconde pluralité de protubérances (202) sont aménagées sous la forme de groupes présentant chacun trois premières ou deuxièmes protubérances voisines (201, 202), respectivement.

**6.** Surface optique (200) selon la revendication 7, dans laquelle les protubérances (201, 202) ont une forme circulaire, elliptique ou polygonale lorsqu'on les observe dans la troisième dimension cartésienne (Z).

**7.** Surface optique (200) selon la revendication 9, dans laquelle les protubérances (201, 202) ont une forme hexagonale lorsqu'on les observe dans la troisième dimension cartésienne (Z).

**8.** Surface optique (200) selon l'une quelconque des revendications précédentes, dans laquelle la surface optique (200) a une épaisseur dans la troisième dimension cartésienne (Z).

**9.** Lentille comprenant une surface optique (200) telle que définie dans l'une quelconque des revendications précédentes.

**10.** Réflecteur comprenant une surface optique (200) telle que définie dans l'une quelconque des revendications 1 à 8.

**11.** Aménagement optique comprenant :

- un réflecteur (1130) qui comprend une surface réfléchissante (1131) qui est configurée pour réfléchir et diffuser un rayonnement (1201) reçu sur la surface réfléchissante (1131), laquelle surface réfléchissante (1131) est métallisée ou constituée d'un polyamide, d'un polycarbonate, d'un acrylonitrile-butadiène-styrène, d'un polytétrafluoroéthylène ou d'un polycarbonate blanc et
- une lentille (1120) comprenant :

• une surface d'incidence de lumière (1121) qui est aménagée pour recueillir ledit rayonnement diffusé (1201) par le réflecteur (1130),
• une surface TIR latérale (1123) et
• une surface d'émission (200) qui est configurée pour recueillir le rayonnement réfracté par la surface d'incidence de lumière (1121) et la surface TIR latérale (1123) et pour émettre le rayonnement réfracté par la lentille (1120),

dans lequel la surface réfléchissante (1131) a une partie (1134) qui flanque la surface TIR latérale (1123) de la lentille (1120) pour réfléchir et réfracter la lumière parasite s'échappant par la surface TIR (1123) de nouveau dans la lentille (1120),
**caractérisé en ce que** la surface d'émission (200) est une surface optique telle que définie par la revendication 1.

**12.** Aménagement optique selon la revendication 11, dans lequel la surface réfléchissante (1131) est conçue comme un profilé fermé qui comprend :

- une extrémité d'entrée (1132) pour recevoir le rayonnement (1201) et ayant un premier diamètre interne moyen et
- une extrémité de sortie (1133) pour acheminer le rayonnement hors du profilé et ayant un second diamètre interne moyen qui est plus grand que le premier diamètre interne moyen de l'extrémité d'entrée (1132) de la surface réfléchissante (1131),

dans lequel la partie (1134) flanquant la surface TIR latérale (1123) est aménagée à l'extrémité de sortie (1133) du réflecteur (1130).

**13.** Aménagement optique selon la revendication 12, dans lequel la partie (1134) de la surface réfléchissante (1131) flanquant la surface TIR latérale (1123) de la lentille (1120) a une forme correspondant à celle de la surface TIR latérale (123).

**14.** Aménagement optique selon l'une quelconque des revendications 11 à 13, dans lequel ladite partie (1134) recouvre au moins la moitié de la longueur de la surface TIR latérale (1123).

**15.** Illuminateur comprenant une source de lumière artificielle pour émettre un rayonnement (1201) qui a un trajet optique, **caractérisé par** un aménagement optique selon l'une quelconque des revendications 11 à 14, dans lequel le réflecteur (1130) est aménagé dans le trajet optique du rayonnement (1201).

FIG. 1

FIG. 2

FIG. 3

FIG. 4a

FIG. 4b

FIG. 5

FIG. 6

FIG. 7

FIG. 8

FIG. 9

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080252853 A
- US 20110018016 A1

- US 4912720 A
- US 5892621 A